# EUROPEAN PATENT SPECIFICATION

(11) **EP 4 475 314 B1**
(45) Date of publication and mention of the grant of the patent: **28.10.2026**
(21) Application number: 23907292.9
(22) Date of filing: 11.09.2023
(51) Int. Cl.: H01M 50/367, H01M 50/213, H01M 50/249, H01M 50/20

(54) **BATTERY PACK AND VEHICLE INCLUDING SAME**
BATTERIEPACK UND FAHRZEUG DAMIT
BLOC-BATTERIE ET VÉHICULE LE COMPRENANT

(30) Priority: 21.12.2022 KR 20220181098; 15.05.2023 KR 20230062677
(43) Date of publication of application: 11.12.2024
(73) Proprietor: LG Energy Solution, Ltd., Seoul 07335 (KR)
(72) Inventor: BAEK, Seung-Ryul, Daejeon 34122 (KR); YANG, Kun-Joo, Daejeon 34122 (KR); YANG, Jin-Oh, Daejeon 34122 (KR)
(74) Representative: Plasseraud IP
(86) International application number: PCT/KR2023/013597
(87) International publication number: WO 2024/136005

(56) References cited:
- WO-A1-2012/140791
- WO-A1-2022/050780
- KR-A- 20170 010 531
- KR-A- 20170 015 141
- KR-A- 20170 015 141
- KR-A- 20200 044 580
- KR-A- 20200 140 335
- KR-A- 20220 010 876

## Description

### TECHNICAL FIELD

The present disclosure relates to a battery pack and a vehicle including the same. More specifically, the present disclosure relates to a battery pack capable of effectively discharging gas or the like vented from a battery cell to the outside of a pack case, and a vehicle including the same.

The present application claims priority to Korean Patent Application No. 10-2022-0181098 filed on December 21, 2022 in the Republic of Korea.

In addition, the present application claims priority to Korean Patent Application No. 10-2023-0062677 filed on May 15, 2023 in the Republic of Korea.

### BACKGROUND ART

Secondary batteries, which are easy to apply depending on the product group and have electrical characteristics such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency in that they have the primary advantage of being able to dramatically reduce the use of fossil fuels and in that no by-product is generated due to energy use.

Types of current secondary batteries widely used include lithium ion batteries, lithium polymer batteries, nickel cadmium batteries, nickel hydrogen batteries, nickel zinc batteries, and the like. The operating voltage of this unit secondary battery cell, that is, the unit battery cell, is approximately 2.5V to 4.5V. Therefore, when an output voltage higher than this is required, a battery pack may be configured by connecting a plurality of battery cells in series. In addition, a battery pack may be configured by connecting multiple battery cells in parallel depending on the charge/discharge capacity required for the battery pack. Accordingly, the number of battery cells included in the battery pack may be set in various ways depending on the required output voltage or charge/discharge capacity.

Meanwhile, a common method for configuring a battery pack by connecting a plurality of battery cells in series/parallel is to preferentially configure a battery module including at least one battery cell and then add other components using the at least one battery module, thereby configuring a battery pack or battery rack.

In the case of a battery pack or battery module with the conventional battery cells, the internal temperature may rise due to abnormalities or misuse of the battery cells, which may result in an increase in the pressure inside the battery cell. Such an increase in the internal pressure may lead to venting or explosion of the battery cell, which is very dangerous because the high temperature gas and flame discharged therefrom may transfer to adjacent battery cells and then cause a series of battery cell explosions.

Therefore, for example, conventional cylindrical battery cells are usually manufactured to include a venting structure on the upper side of the cylindrical battery cell where the positive terminal is formed, and a battery pack or battery module that stores the cylindrical battery cells in an upright state is configured to have a predetermined space in the direction in which gas vents from the cylindrical battery cell or the cylindrical battery cell explodes, that is, above a top cover of the pack case or module case facing the venting structure of the cylindrical battery cell so that high temperature gas and flame may escape, thereby delaying the time for transfer of the high temperature gas and flame to other battery cells or preventing the transfer.

However, in the conventional structure, it is difficult for high temperature gas and flame to be guided only above the top cover, and the gases and flames spread in all directions inside the battery pack or battery module, which restricts the efficient discharge of the gas or the like to the outside of the battery pack or battery module, so there is a need to improve the same.

KR 2017 0015141 and WO 2012/140791 relate to battery packs.

### DISCLOSURE

### Technical Problem

The present disclosure has been designed to solve the problems of the related art, and therefore the present disclosure is directed to providing a battery pack capable of more efficiently discharging high temperature gas and flame to the outside of the battery pack in the case where the battery cell has abnormality, and a vehicle including the same.

However, the problems that the present disclosure seeks to solve are not limited to the above-mentioned problems, and other problems not mentioned above may be clearly understood by those skilled in the art from the description of the invention described below.

### Technical Solution

In one aspect of the present disclosure, there is provided a battery pack including a cell array including a plurality of battery cells and a pack case accommodating the cell array, wherein the pack case may include a venting device configured to discharge gas generated from the cell array to the outside of the pack case and a rib provided below the cell array to guide the gas to the venting device.

The rib may be configured to come into surface contact with the lower surface of the cell array.

The rib may be bonded and fixed to the lower surface of the cell array.

The pack case may include a case frame having top and bottom openings and accommodating the cell array, and a bottom cover coupled to the case frame so as to cover the bottom of the case frame.

A plurality of ribs may be provided on the bottom cover so as to be spaced apart from each other in one direction of the bottom cover.

At least one venting passage through which the gas flows may be defined by the ribs, and the venting passage may be provided to lead to the venting device.

The bottom cover may be manufactured by extrusion such that the rib is integrally formed with the bottom cover.

The venting device may be provided on one side of the case frame, and the case frame may include a gas inlet provided between the venting passage and the venting device to allow the gas to pass therethrough.

The gas inlet may be provided independently for each venting passage.

The gas inlet may be configured in a rectangular shape such that the length of the gas inlet in the width direction corresponds to the gap between the ribs.

In addition, according to another embodiment of the present disclosure, the gas inlets may be integrated with each other.

The case frame may include a side gas channel connected to the gas inlet and the venting device to allow the gas to flow therethrough.

The side gas channel may be formed along the extension direction of the case frame.

The bottom cover may include a plurality of bottom plates coupled to each other by friction stir welding.

The case frame and the bottom cover may be coupled by friction stir welding.

The venting device may be provided on both sides of the case frame.

The rib extends in a direction toward the venting device.

The case frame may include an indentation to accommodate the venting device.

The pack case may accommodate a plurality of cell arrays, and the case frame may further include partition walls partitioning the plurality of cell arrays to be separated from each other.

The venting device may be provided to correspond to each of the plurality of cell arrays.

In addition, the present disclosure provides a vehicle including the battery pack according to the present disclosure.

### Advantageous Effects

According to the present disclosure, a battery pack capable of efficiently guiding high temperature gas and flame that may be generated when the battery cell has abnormality to a venting device, thereby ensuring the safety and reliability of the battery pack.

Additionally, when high temperature gas or flame is generated due to a thermal event occurring in the battery cell, the high temperature gas and flame can be guided in a specific direction and quickly discharged to the outside of the pack case.

In addition, thermal damage to other battery cells may be prevented in the process of discharging high temperature gas or the like vented from the battery cell to the outside of the pack case.

In addition, since the space where the gas vented from the battery cell flows is divided into several areas inside the pack case to diversify gas discharge paths and increase the total discharge amount, even if a large amount of gas is generated, it is possible to effectively and quickly discharge the gas to the outside of the battery pack.

Furthermore, the present disclosure may have various other effects, and these will be explained in the respective embodiments, or descriptions of effects that may be easily inferred by those skilled in the art will be omitted.

### DESCRIPTION OF DRAWINGS

The accompanying drawings illustrate a preferred embodiment of the present disclosure and, together with the foregoing disclosure, serve to provide further understanding of the technical features of the present disclosure, and thus, the present disclosure is not construed as being limited to the drawing.
FIG. 1 is a perspective view illustrating a combined battery pack according to an embodiment of the present disclosure.
FIG. 2 is an exploded perspective view of the battery pack in FIG. 1.
FIG. 3 is a cross-sectional view of the battery pack taken along line III-III' in FIG. 1.
FIG. 4 is an enlarged view of area A in FIG. 3.
FIG. 5 is a diagram illustrating a direction in which gas vented from a battery cell is discharged from the battery pack in FIG. 1.
FIG. 6 is an enlarged view of a venting device included in the battery pack in FIG. 5.
FIG. 7 is an enlarged view of a gas inlet included in a case frame of the battery pack in FIG. 5.
FIG. 8 is a diagram illustrating another embodiment of a gas inlet of a battery pack.
FIG. 9 is a diagram illustrating a method of manufacturing a bottom cover included in the battery pack in FIG. 1.
FIG. 10 is a diagram illustrating a method of manufacturing a pack case included in the battery pack in FIG. 1.
FIG. 11 is a perspective view of a vehicle including the battery pack in FIG. 1.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the embodiments described herein and the configurations shown in the drawings show only the most preferred embodiment of the present disclosure and are not intended to represent all technical concepts of the present disclosure, so it should be understood that other equivalents and modifications could be made to replace the same at the time of filing this application.

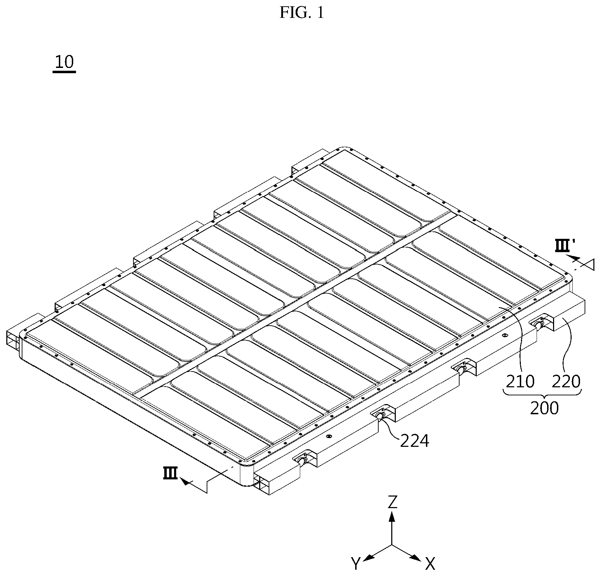

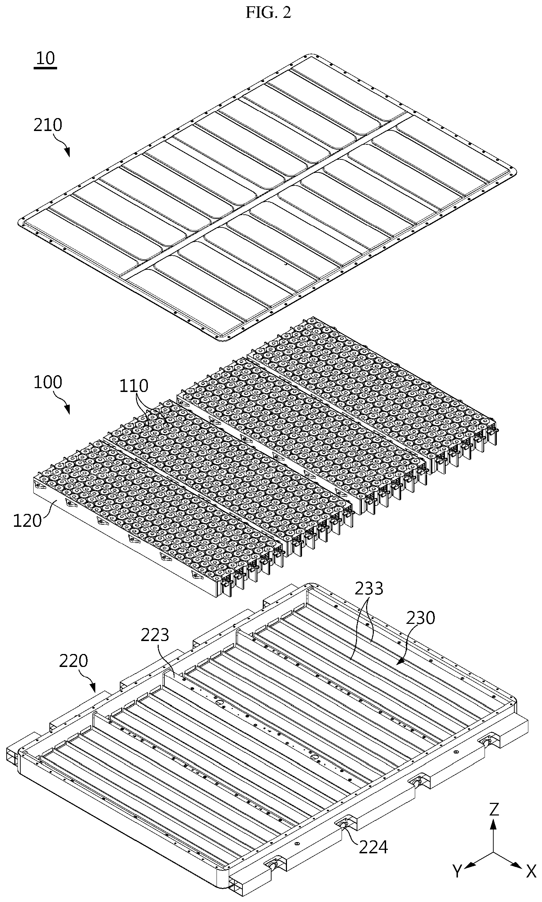

FIG. 1 is a perspective view illustrating a combined battery pack according to an embodiment of the present disclosure, and FIG. 2 is an exploded perspective view of the battery pack in FIG. 1.

Referring to FIGS. 1 and 2, a battery pack 10 according to an embodiment of the present disclosure includes a cell array 100 including a plurality of battery cells 110, and a pack case 200 for accommodating the cell array 100.

The cell array 100 is a collection of battery cells 110. In order to gather the plurality of battery cells 110 into one mass and maintain them as a single unit, the space between the battery cells 110a may be filled with a binding material such as resin. As another example, the cell array 100 may be a battery module including a module housing 120 that accommodates the battery cells 110. The module housing 120 may be made of a material with high mechanical rigidity to protect the battery cells 110 from external impact and vibration and, preferably, may be made of a metal material.

The battery cell 110 may be applied to any type of secondary battery, such as a prismatic, cylindrical, or pouch-type battery cell, and in this embodiment, the battery cell 110 is provided as a cylindrical battery cell. In particular, the battery cell 110 may be a cylindrical battery cell that includes a venting structure such as a vent notch at the bottom thereof. The vent notch is broken when the pressure inside the battery cell 110 increases abnormally, thereby discharging the internal gas to the outside. As described above, if the vent notch is provided at the bottom of the battery cell 110, it may be helpful in guiding the venting gas to be discharged toward the lower side of the battery pack 10. A plurality of battery cells 110 may be arranged in columns and rows inside the cell array 100. A plurality of cell arrays 100 may be provided in the battery pack 10.

The pack case 200 includes a venting device 224 provided to discharge gas generated from the cell array 100 to the outside of the pack case 200 and a rib 233 that is provided below the cell array 100 to guide the gas to the venting device 224. The venting device 224 and the rib 233 are positioned lower than the cell array 100.

The pack case 200 may accommodate a plurality of cell arrays 100, and a case frame 220 may further include partition walls 223 that partition the plurality of cell arrays 100 to be separated from each other. A plurality of partition walls 223 may be provided so as to be spaced apart at regular intervals from each other.

The cell array 100 may be accommodated inside the pack case 200 while being partitioned by the partition walls 223 and supported by the ribs 233. If the venting structure of the battery cell 110 included in the cell array 100 is provided at the bottom of the battery cell 110 as described above, high temperature gas vented downwards through the venting structure of the battery cell 110 may be guided to the venting device 224 through the ribs 233 located below the cell array 100 and then quickly discharged. The gas may be blocked from spreading laterally inside the battery pack 10 by the partition walls 223 and the ribs 233, and the gas may be blocked from spreading upwards inside the battery pack 10 by the cell array 100.

As described above, the battery pack 10 according to the present disclosure is able to discharge high temperature gas or flame generated due to a thermal event in any battery cell 110 in a specific direction rather than in all directions to the outside of the pack case 200 through the venting device 224 and prevent thermal damage to other battery cells 110 as much as possible in the process of discharging the gas to the outside of the pack case 200. In addition, when the gas vents from the battery cell, pieces of electrode plates or active materials inside the battery cell may be generally heated to a high temperature and discharged to the outside, and these high temperature particles may cause sparks. The battery pack 10 according to the present disclosure may prevent high temperature particles from easily escaping out of the battery pack 10 even if they are emitted from the battery cell 110 and may sufficiently lower the temperature of the particles while being guided to the venting device 224 through the space between the ribs 233 and then discharge the same, so that the particles may be prevented from acting as an ignition source outside the battery pack 10.

The venting gas spreads in all directions inside the battery pack and is then discharged upwards in the conventional battery pack, whereas, according to the present embodiment, the venting gas is quickly guided from the lower portion of the cell array 100 to the venting device 224 and is unlikely to spread in all directions inside the battery pack 10, and the final discharge direction thereof may not be the upward direction of the battery pack 10. If the gas generated inside the battery pack is discharged in multiple directions, instead of in one direction, the venting gas may not be easily discharged to the outside of the battery pack, and the time for discharging the venting gas may increase, thereby significantly reducing the safety of the battery pack.

According to the present disclosure, a venting path using the ribs 233 and the venting device 224 may be formed below the cell array 100, and the venting gas may be discharged in an intended direction, for example, in the direction toward the venting device 224.

According to the above embodiment, when high temperature gas or flame is discharged from the battery cell 110 in the case of thermal runaway or the like, the discharged gas or flame may not be directed to the upper side. In particular, in the case where a passenger is located above the battery pack 10, such as in an electric vehicle, according to the above embodiment, it is possible to suppress or delay the gas or flame from heading toward the passenger. In particular, according to an embodiment of the present disclosure, directional venting may be performed downwards and laterally from the battery pack 10, thereby improving the safety of users located on the upper side, such as passengers.

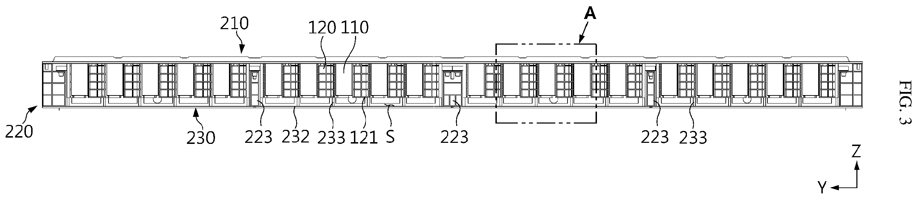

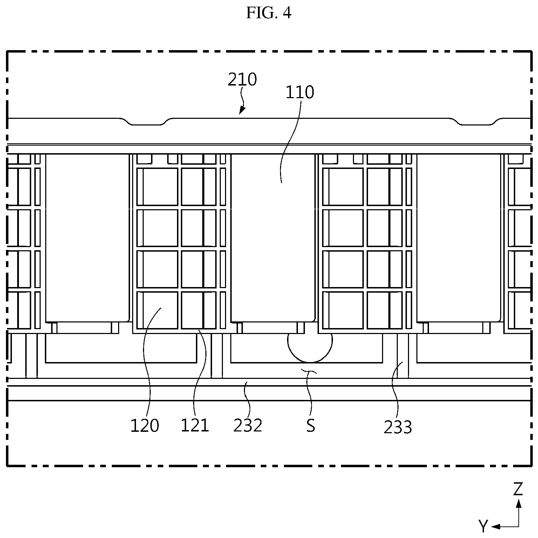

In particular, the special structure and arrangement of the ribs 233 may give a significant effect of guiding the high temperature gas and flame toward the venting device 224. Hereinafter, the configuration of the pack case 200 including the ribs 233 will be described in more detail with further reference to FIGS. 3 and 4 along with FIGS. 1 and 2.

FIG. 3 is a cross-sectional view of the battery pack taken along line III-III' in FIG. 1, and FIG. 4 is an enlarged view of area A in FIG. 3.

As shown in FIGS. 1 to 4, the pack case 200 included in the battery pack 10 according to an embodiment of the present disclosure includes a case frame 220 that is provided to have top and bottom openings and accommodates the cell array 100.

The pack case 200 may include a bottom cover 230 that is coupled to the case frame 220 so as to cover the bottom of the case frame 220. The bottom cover 230 may include a base 232 that supports the bottom of the cell array 100. The base 232 may be configured in the shape of a substantially rectangular plate. Additionally, the bottom cover 230 may be manufactured by extrusion such that the ribs 233 are integrally formed with the bottom cover 230. A detailed description of the method of manufacturing the bottom cover 230 will be described later.

The case frame 220 may be provided to form a rectangular wall along the outer perimeter of the rectangular plate-shaped base 232. For example, in the embodiment shown in FIG. 2, the case frame 220 may include walls in the +X direction, -Y direction, -X direction, and +Y direction.

Meanwhile, the pack case 200 may include a top cover 210 capable of being coupled to the case frame 220 so as to cover the top of the case frame 220. The top cover 210 may be coupled to the top of the case frame 220, and the bottom cover 230 may be coupled to the bottom of the case frame 220, thereby forming the pack case 200 accommodating the cell array 100. A plurality of the cell arrays 100 may be provided in the battery pack 10, and the respective cell arrays 100 may be placed on the bottom cover 230 so as to be separated from each other by the partition walls 223. The top cover 210 may be provided in closer contact with the upper surface of the cell array 100 to prevent unnecessary space from being formed between the top cover 210 and the cell array 100.

In particular, the ribs 233 according to the present embodiment may be provided to come into surface contact with the lower surface of the cell array 100. That is, the lower surface of the cell array 100 may be supported by the upper surfaces of the ribs 233 while being in contact therewith. Since they are in surface contact, instead of point contact or line contact, with each other to secure a larger contact area, and since the surface contact acts as a kind of barrier, the gas discharged from the battery cell 110 included in the cell array 100 may be prevented from spreading in all directions. Accordingly, the venting gas may be guided to be discharged in a designated direction, that is, to the lower portion of the pack case 200, thereby ensuring safety.

In this case, the rib 233 may be bonded and fixed to the lower surface of the cell array 100. The rib 233 and the cell array 100 may be bonded to each other using a structural adhesive to further strengthen the connection and fixation structure thereof. A plurality of ribs 233 may be provided on the bottom cover 230 so as to spaced apart from each other in one direction of the bottom cover 230. The present embodiment shows an example in which they are spaced apart from each other in the Y direction. The number and thicknesses of the ribs 233 may vary depending on the required rigidity or designer's intention.

Accordingly, the plurality of ribs 233 spaced apart from each other may define at least one venting passage S through which the gas flows, and the venting passage S may be provided to lead to the venting device 224. The venting passage S may be defined as a space between two adjacent ribs 233, and may provide a predetermined space below the cell array 100 for gas to flow.

As described above, the ribs 233 may be provided below the cell array 100, thereby vertically separating the space where the cell array 100 is disposed and the space through which the venting gas flows inside the pack case 200. In addition, the space through which the gas flows, that is, the venting passage S, may be divided into several areas by the ribs 233, thereby diversifying gas discharge paths and increasing the total volume of the discharge paths. Therefore, the venting passage S formed in the battery pack 10 of the present disclosure may be effective in smoothly discharging venting gas to the outside of the battery pack 10 even if a large amount of venting gas is generated.

In addition, the venting passage S may be configured to be respectively connected to a plurality of battery cells 110 that may be arranged in a row inside the cell array 100. Accordingly, the gas discharged from any battery cell 110 may be prevented from moving to another venting passage S by the ribs 233.

The respective battery cells 110 may be placed on the bottom cover 230 as shown in FIGS. 3 and 4, and in the case where the cell array 100 includes a module housing 120, the module housing 120 may have a framework for accommodating and supporting the battery cells 110 and may also have cell venting holes 121 arranged at the bottom of the battery cells 110. For example, if there is an ignition issue due to a short circuit or overcharge of the battery cell 110, flame, high temperature particles, and venting gas may be generated from the battery cell 110. In this case, the cell venting holes 121 may be provided to lead to the venting passage S, and the gas may vent from the inside of the cell array 100 through the cell venting holes 121 to the outside, that is, to the venting passage S.

A packing member (not shown) may be attached to the cell venting hole 121. The packing member may usually seal the cell venting hole 121 to prevent foreign substances from entering the module housing 120. The packing member may be made of a material that may rupture at a certain pressure or more or melt by heat, such as a plastic material. That is, when there is an issue of internal ignition of the cell array 100, the packing member made of plastic may be removed due to the pressure or heat of discharged gas, thereby opening the cell venting holes 121.

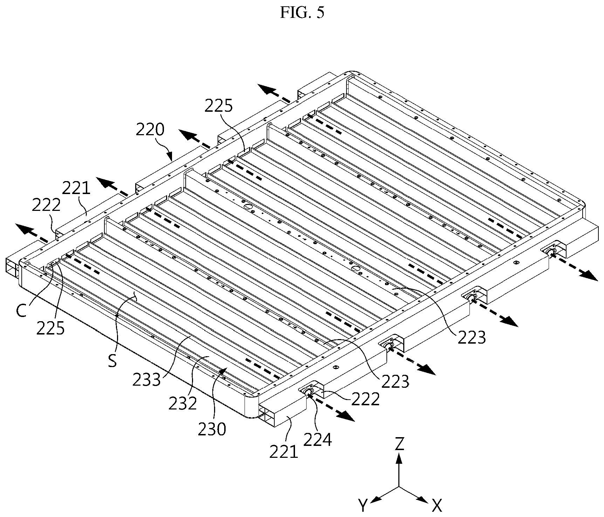

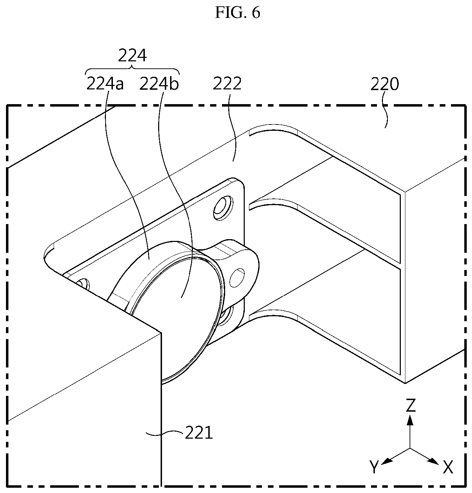

FIG. 5 is a diagram illustrating a direction in which gas vented from a battery cell is discharged from the battery pack in FIG. 1, and FIG. 6 is an enlarged view of a venting device included in the battery pack in FIG. 5.

According to FIG. 5, the venting device 224 may be provided on both sides of the case frame 220. Although the venting device 224 is provided on the wall in the Y direction in FIG. 5, it may also be provided on the wall in the X direction. Since the venting device 224 is provided on both sides of the case frame 220, when the battery cell 110 is abnormal, high temperature gas and flame may be discharged in both directions of the pack case 200, so it is easy to discharge gas, etc. to the outside of the pack case 200.

In this case, the rib 233 may extend in a direction toward the venting device 224. The structure of the rib 233 may guide the high temperature gas and flame to the venting device 224 such that the high temperature gas and flame may be discharged through the venting device 224. In addition, in the embodiment, the rib 233 may extend in a direction in which the partition wall 223 extends. Accordingly, the venting passage S by the ribs 233 may not be blocked by the partition wall 223.

In addition, the venting device 224 may be provided to correspond to each of the plurality of cell arrays 100. That is, the plurality of cell arrays 100 may be partitioned by the partition walls 223, and the venting devices 224 may be respectively provided in the areas where the cell arrays 100 partitioned by the partition walls 223 are disposed. As a result, even if a thermal event occurs in any cell array 100, it is possible to prevent gas, etc. from moving to adjacent cell arrays 100 and causing a chain explosion.

Meanwhile, referring to FIG. 6, the case frame 220 may include a side frame 221 on which the venting device 224 is provided and an indentation 222 that is formed by a portion of the side frame 221 recessed inward to accommodate the venting device 224. The indentation 222 prevents the venting device 224 from being exposed to the outside of the pack case 200.

The venting device 224 may be comprised of an external venting hole 224a formed by perforating a portion of the outer surface of the side frame 221 and a venting valve 224b that selectively opens and closes the external venting hole 224a.

Referring back to FIG. 5, the case frame 220 may include a gas inlet 225 provided between the venting passage S and the venting device 224 and allowing gas to pass therethrough. A plurality of gas inlets 225 may be provided, and the gas inlets 225, like the venting device 224, may be formed on both sides of the case frame 220. That is, the gas inlets 225 may be provided to lead to both sides of the venting passage S. In this case, the gas inlet 225 may be provided on the inner surface of the case frame 220, which faces the venting passage S, and the venting device 224 may be provided on the outer surface of the case frame 220. The detailed shape and structure of the gas inlet 225 will be described later.

The case frame 220 may include a side gas channel C connected to the gas inlet 225 and the venting device 224 such that the gas flows therethrough. That is, the case frame 220 may have a side gas channel C that is a space through which the gas flows inside the side frame 221. The side gas channel C may be formed along the extension direction of the case frame 220. As shown in FIG. 5, in the case where the case frame 220 is configured as a rectangular wall, the side gas channel C may be formed only on the wall where the venting device 224 is provided.

The direction in which gas is discharged when a high temperature gas or flame is generated from the battery cell 110 will be described in detail. The gas may flow from the cell venting hole 121 into the venting passage S surrounded by the ribs 233, and the gas flowing through the venting passage S may flow into the side gas channel C through the gas inlets 225 provided on both sides thereof. Thereafter, the gas may be discharged to the outside of the pack case 200 through the venting device 224. Accordingly, there is provided the effect of more efficiently guiding high temperature gas and flame to the venting device 224 in the event of an abnormality in the battery cell 110.

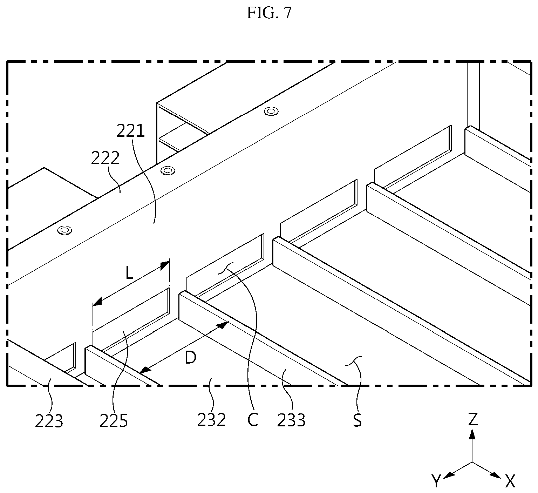

FIG. 7 is an enlarged view of a gas inlet included in the case frame of the battery pack in FIG. 5.

The structure of the gas inlet 225 will be described in detail. Referring to FIG. 7, the gas inlet 225 included in the case frame 220 of the battery pack 10 according to an embodiment of the present disclosure may be independently provided for each venting passage S. In other words, the gas inlets 225 may be provided to correspond one-to-one to the plurality of venting passages S. Accordingly, the gas generated from any one battery cell 110 flows only through the venting passage S connected to the corresponding battery cell 110, so that the gas is very unlikely to spread to other venting passages S by means of the ribs 233 that define the venting passages S.

According to the configuration of the gas inlet 225, the gas or flame generated from any battery cell 110 may move along the respective gas inlets 225 provided in the case frame 220 and may be discharged to the outside of the battery pack 10 through the venting devices 224. In this case, the gas inlet 225 may be configured in a rectangular shape such that the length L of the gas inlet 225 in the width direction corresponds to the distance D between the ribs 233. As a result, a larger amount of gas may flow into the side gas channel C and may be discharged to the outside of the battery pack 10 more quickly, compared to the case where the gas inlet 225 is provided as a circular hole with a small diameter.

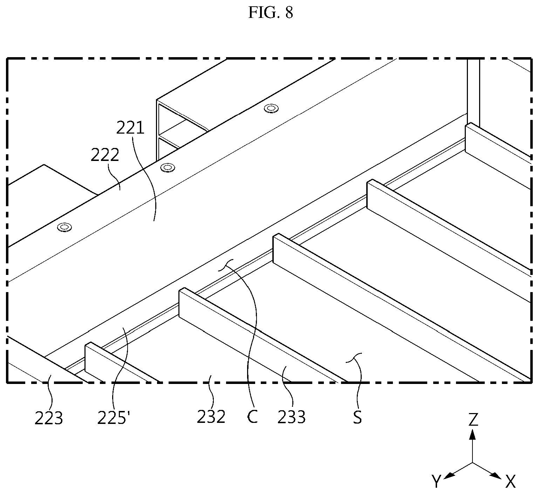

FIG. 8 is a diagram illustrating another embodiment of a gas inlet of a battery pack.

The same reference numerals as those in the above-described embodiment indicate the same elements, and redundant descriptions of the same elements will be omitted and the description will be made based on the differences from the above-described embodiment.

Unlike the gas inlet 225 respectively provided in each venting passage S in the above-described embodiment, a gas inlet 225' according to another embodiment is obtained by integrating the gas inlets 225 in the above-described embodiment. That is, the gas inlet 225' may be provided such that gas flowing through a plurality of venting passages S flows into the same. The gas inlet 225' may be provided in each cell array 100 provided in the area between the partition walls 223 so as to be formed along both sides of the case frame 220, that is, in the Y direction. Accordingly, a larger amount of gas may flow into the side gas channel C, compared to the gas inlet 225 in the above-described embodiment, and may be discharged to the outside of the battery pack 10 more quickly.

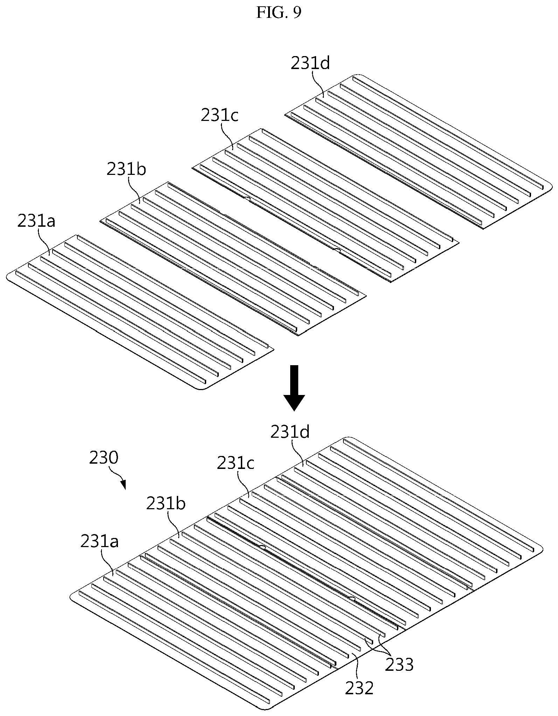

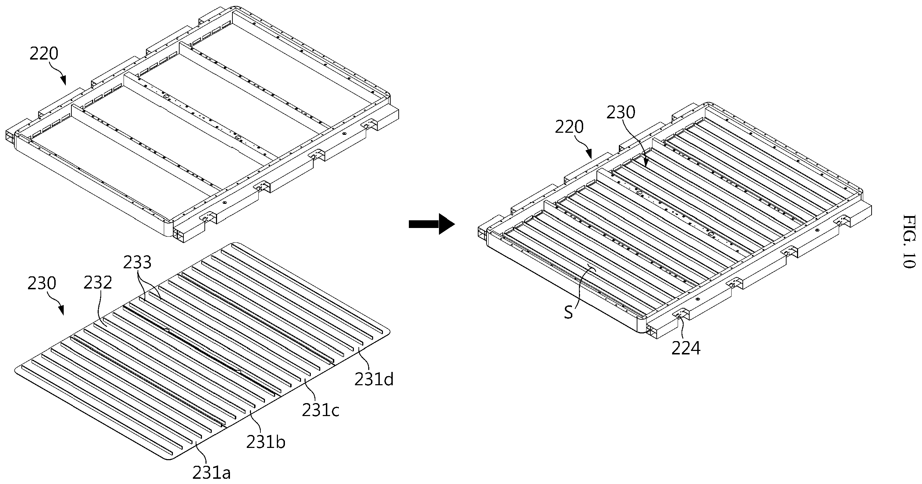

FIG. 9 is a diagram illustrating a method of manufacturing a bottom cover included in the battery pack in FIG. 1, and FIG. 10 is a diagram illustrating a method of manufacturing a pack case included in the battery pack in FIG. 1.

The bottom cover 230 may be extruded in one step. Alternatively, as shown in FIG. 9, the bottom cover 230 may include a plurality of bottom plates 231a to 231d that are coupled to each other by friction stir welding. In other words, a plurality of bottom plates 231a to 231d may be preferentially manufactured by extrusion, and then the plurality of bottom plates 231a to 231d may be friction-stir-welded while the sides thereof are in contact with each other, thereby manufacturing a single bottom cover 230.

The bottom cover 230 may be manufactured by extrusion such that the ribs 233 are integrally formed with the bottom cover 230. As the bottom cover 230 is manufactured by extrusion, the ribs 233 may be formed to extend in one direction (the X direction or Y direction) along the extrusion direction. Since the ribs 233 are integrally formed with the bottom cover 230, the process of coupling the ribs 233 to the bottom cover 230 is unnecessary, and since there is no defect in the coupling portion, the gas is more unlikely to spread to other venting passages S.

Meanwhile, referring to FIG. 10, the case frame 220 and the bottom cover 230 may be coupled by friction stir welding. Specifically, the bottom cover 230 may be seated on the case frame 220 of the pack case 200, and the bottom cover 230 and the case frame 220 may be friction-stir-welded while overlapping each other, thereby configuring the pack case 200. As a result, the gas flowing through the venting passage S may be prevented from leaking to the outside of the pack case 200 and may be discharged to the outside only through the venting device 224.

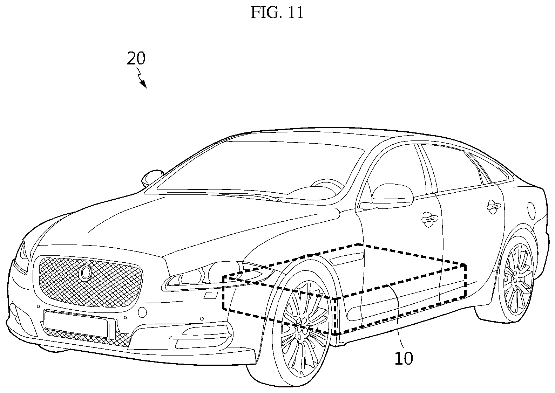

FIG. 11 is a perspective view of a vehicle including the battery pack in FIG. 1.

Meanwhile, the present disclosure may provide a vehicle 20 including a battery pack 10 according to the above-described embodiments. In other words, the battery pack 10 according to the present disclosure may be applied to vehicles such as electric vehicles or hybrid vehicles. For example, the battery pack 10 may be installed in the car body frame under the vehicle seat or in the trunk space.

According to the various embodiments described above, there may be provided a battery pack 10 capable of efficiently guiding high temperature gas and flame that may be generated from the battery cell 110 when the battery cell 110 is abnormal to the venting device 224 and quickly discharging the same to the outside, and a vehicle 20 including the same.

For reference, the battery pack 10 according to the present disclosure may be applied to ESSs (Energy Storage Systems) or various electric devices, in addition to vehicles.

Meanwhile, although terms indicating directions such as up, down, left, right, front, and back are used in this specification, it is obvious to those skilled in the art to which the present disclosure pertains that these terms are only for convenience of explanation and may vary depending on the location of the target object or the location of the observer.

As described above, although the present disclosure has been described with reference to limited embodiments and drawings, the present disclosure is not limited thereto, and various modifications and variations are possible by those skilled in the art to which the present disclosure pertains the claims to be described below.

## Claims

1. A battery pack (10) comprising:
a cell array (100) comprising a plurality of battery cells (110); and
a pack case (200) configured to accommodate the cell array (100), and including a case frame (220) accommodating the cell array (100),
**characterized in that** the pack case (200) comprises:
a venting device (224) configured to discharge gas generated from the cell array (100) to the outside of the pack case (200), the venting device (224) being provided on a wall of the case frame (220); and
a rib (233) provided below the cell array (100) to guide the gas to the venting device (224),
wherein the rib (233) extends in a direction toward the venting device (224).

2. The battery pack according to claim 1,
wherein the rib (233) is configured to come into surface contact with the lower surface of the cell array (100).

3. The battery pack according to claim 1,
wherein the pack case (200) comprises:
a case frame (220) having top and bottom openings and configured to accommodate the cell array (100); and
a bottom cover (230) coupled to the case frame (220) so as to cover the bottom of the case frame (220).

4. The battery pack according to claim 3,
wherein a plurality of ribs (233) is provided on the bottom cover (230) so as to be spaced apart from each other in one direction of the bottom cover (230).

5. The battery pack according to claim 4,
wherein at least one venting passage (S) through which the gas flows is defined by the ribs (233), and
wherein the venting passage (S) is provided to lead to the venting device (224).

6. The battery pack according to claim 5,
wherein the venting device (224) is provided on a side of the case frame (220), and
wherein the case frame (220) comprises
a gas inlet (225) provided between the venting passage (S) and the venting device (224) to allow the gas to pass therethrough.

7. The battery pack according to claim 6,
wherein the gas inlet (225) is provided independently for each venting passage (S).

8. The battery pack according to claim 7,
wherein the gas inlet (225) is configured in a rectangular shape such that the length of the gas inlet (225) in the width direction corresponds to the gap between the ribs (233).

9. The battery pack according to claim 7,
wherein the gas inlets (225) for a plurality of venting passages (S) are integrated with each other.

10. The battery pack according to claim 6,
wherein the case frame (220) comprises
a side gas channel (C) connected to the gas inlet (225) and the venting device (224) to allow the gas to flow therethrough.

11. The battery pack according to claim 10,
wherein the side gas channel (C) is formed along the extension direction of the case frame (220).

12. The battery pack according to claim 6,
wherein the venting device (224) is provided on both sides of the case frame (220).

13. The battery pack according to claim 12,
wherein the rib (233) extends in a direction toward the venting device (224).

14. The battery pack according to claim 12,
wherein the case frame (220) comprises an indentation configured to accommodate the venting device (224).

15. The battery pack according to claim 3,
wherein the pack case (200) is configured to accommodate a plurality of cell arrays (100), and
wherein the case frame (220) further comprises partition walls (223) partitioning the plurality of cell arrays (100) to be separated from each other.

16. The battery pack according to claim 15,
wherein each of the venting devices (224) is provided to correspond to one of the plurality of cell arrays (100).

17. A vehicle comprising the battery pack according to any one of claims 1 to 16.

## Patentansprüche

1. Batteriepack (10), umfassend:
ein Zellenarray (100), das eine Mehrzahl von Batteriezellen (110) umfasst; und
ein Packgehäuse (200), das dafür konfiguriert ist, das Zellenarray (100) aufzunehmen, und einen Gehäuserahmen (220) enthält, der das Zellenarray (100) aufnimmt,
**dadurch gekennzeichnet, dass** das Packgehäuse (200) umfasst:
eine Entgasungsvorrichtung (224), die dafür konfiguriert ist, aus dem Zellenarray (100) erzeugtes Gas an die Außenseite des Packgehäuses (200) abzuführen, wobei die Entgasungsvorrichtung (224) an einer Wand des Gehäuserahmens (220) vorgesehen ist; und
eine Rippe (233), die unter dem Zellenarray (100) vorgesehen ist, um das Gas zu der Entgasungsvorrichtung (224) zu leiten,
wobei sich die Rippe (233) in einer Richtung hin zu der Entgasungsvorrichtung (224) erstreckt.

2. Batteriepack nach Anspruch 1,
wobei die Rippe (233) dafür konfiguriert ist, mit der Unterseite des Zellenarrays (100) in Oberflächenkontakt zu kommen.

3. Batteriepack nach Anspruch 1,
wobei das Packgehäuse (200) umfasst:
einen Gehäuserahmen (220), der obere und untere Öffnungen aufweist und dafür konfiguriert ist, das Zellenarray (100) aufzunehmen; und
eine Bodenabdeckung (230), die mit dem Gehäuserahmen (220) gekoppelt ist, um die Unterseite des Gehäuserahmens (220) abzudecken.

4. Batteriepack nach Anspruch 3,
wobei eine Mehrzahl von Rippen (233) auf der Bodenabdeckung (230) so vorgesehen ist, dass sie in einer Richtung der Bodenabdeckung (230) voneinander beabstandet sind.

5. Batteriepack nach Anspruch 4,
wobei mindestens ein Entgasungskanal (S), durch den das Gas strömt, durch die Rippen (233) definiert ist, und
wobei der Entgasungskanal (S) so vorgesehen ist, dass er zu der Entgasungsvorrichtung (224) führt.

6. Batteriepack nach Anspruch 5,
wobei die Entgasungsvorrichtung (224) an einer Seite des Gehäuserahmens (220) vorgesehen ist, und
wobei der Gehäuserahmen (220) umfasst:
einen Gaseinlass (225), der zwischen dem Entgasungskanal (S) und der Entgasungsvorrichtung (224) vorgesehen ist, um das Gas hindurchtreten zu lassen.

7. Batteriepack nach Anspruch 6,
wobei der Gaseinlass (225) unabhängig für jeden Entgasungskanal (S) vorgesehen ist.

8. Batteriepack nach Anspruch 7,
wobei der Gaseinlass (225) in einer rechteckigen Form konfiguriert ist, so dass die Länge des Gaseinlasses (225) in der Breitenrichtung dem Spalt zwischen den Rippen (233) entspricht.

9. Batteriepack nach Anspruch 7,
wobei die Gaseinlässe (225) für eine Mehrzahl von Entgasungskanälen (S) miteinander integriert sind.

10. Batteriepack nach Anspruch 6,
wobei der Gehäuserahmen (220) umfasst:
einen seitlichen Gaskanal (C), der mit dem Gaseinlass (225) und der Entgasungsvorrichtung (224) verbunden ist, um das Gas hindurchströmen zu lassen.

11. Batteriepack nach Anspruch 10,
wobei der seitliche Gaskanal (C) entlang der Erstreckungsrichtung des Gehäuserahmens (220) ausgebildet ist.

12. Batteriepack nach Anspruch 6,
wobei die Entgasungsvorrichtung (224) auf beiden Seiten des Gehäuserahmens (220) vorgesehen ist.

13. Batteriepack nach Anspruch 12,
wobei sich die Rippe (233) in einer Richtung hin zu der Entgasungsvorrichtung (224) erstreckt.

14. Batteriepack nach Anspruch 12,
wobei der Gehäuserahmen (220) eine Vertiefung umfasst, die dafür konfiguriert ist, die Entgasungsvorrichtung (224) aufzunehmen.

15. Batteriepack nach Anspruch 3,
wobei das Packgehäuse (200) dafür konfiguriert ist, eine Mehrzahl von Zellenarrays (100) aufzunehmen, und
wobei der Gehäuserahmen (220) ferner Trennwände (223) umfasst, welche die Mehrzahl von Zellenarrays (100) unterteilen, so dass sie voneinander getrennt sind.

16. Batteriepack nach Anspruch 15,
wobei jede der Entgasungsvorrichtungen (224) so vorgesehen ist, dass sie einem aus der Mehrzahl von Zellenarrays (100) entspricht.

17. Fahrzeug, umfassend den Batteriepack nach einem der Ansprüche 1 bis 16.

## Revendications

1. Bloc-batterie (10) comprenant :
un réseau de cellules (100) comprenant une pluralité de cellules de batterie (110) ;
et
un boîtier de bloc (200) configuré pour loger le réseau de cellules (100), et incluant un cadre de boîtier (220) logeant le réseau de cellules (100),
**caractérisé en ce que** le boîtier de bloc (200) comprend :
un dispositif de dégazage (224) configuré pour décharger du gaz généré par le réseau de cellules (100) vers l'extérieur du boîtier de bloc (200), le dispositif de dégazage (224) étant prévu sur une paroi du cadre de boîtier (220) ; et
une nervure (233) prévue sous le réseau de cellules (100) pour guider le gaz vers le dispositif de dégazage (224),
dans lequel la nervure (233) s'étend dans une direction vers le dispositif de dégazage (224).

2. Bloc-batterie selon la revendication 1,
dans lequel la nervure (233) est configurée pour venir en contact de surface avec la surface inférieure du réseau de cellules (100).

3. Bloc-batterie selon la revendication 1,
dans lequel le boîtier de bloc (200) comprend :
un cadre de boîtier (220) présentant des ouvertures supérieure et inférieure et configuré pour loger le réseau de cellules (100) ; et
un couvercle inférieur (230) couplé au cadre de boîtier (220) de manière à recouvrir le fond du cadre de boîtier (220).

4. Bloc-batterie selon la revendication 3,
dans lequel une pluralité de nervures (233) est prévue sur le couvercle inférieur (230) de manière à être espacées les unes des autres dans une direction du couvercle inférieur (230).

5. Bloc-batterie selon la revendication 4,
dans lequel au moins un passage de dégazage (S) à travers lequel le gaz s'écoule est défini par les nervures (233), et
dans lequel le passage de dégazage (S) est prévu pour mener au dispositif de dégazage (224).

6. Bloc-batterie selon la revendication 5,
dans lequel le dispositif de dégazage (224) est prévu sur un côté du cadre de boîtier (220), et
dans lequel le cadre de boîtier (220) comprend :
une entrée de gaz (225) prévue entre le passage de dégazage (S) et le dispositif de dégazage (224) pour permettre au gaz d'y passer à travers.

7. Bloc-batterie selon la revendication 6,
dans lequel l'entrée de gaz (225) est prévue indépendamment pour chaque passage de dégazage (S).

8. Bloc-batterie selon la revendication 7,
dans lequel l'entrée de gaz (225) est configurée sous une forme rectangulaire de sorte que la longueur de l'entrée de gaz (225) dans la direction de largeur correspond à l'intervalle entre les nervures (233).

9. Bloc-batterie selon la revendication 7,
dans lequel les entrées de gaz (225) pour une pluralité de passages de dégazage (S) sont intégrées les unes aux autres.

10. Bloc-batterie selon la revendication 6,
dans lequel le cadre de boîtier (220) comprend :
un canal de gaz latéral (C) connecté à l'entrée de gaz (225) et au dispositif de dégazage (224) pour permettre au gaz de s'y écouler à travers.

11. Bloc-batterie selon la revendication 10,
dans lequel le canal de gaz latéral (C) est formé le long de la direction d'extension du cadre de boîtier (220).

12. Bloc-batterie selon la revendication 6,
dans lequel le dispositif de dégazage (224) est prévu sur les deux côtés du cadre de boîtier (220).

13. Bloc-batterie selon la revendication 12,
dans lequel la nervure (233) s'étend dans une direction vers le dispositif de dégazage (224).

14. Bloc-batterie selon la revendication 12,
dans lequel le cadre de boîtier (220) comprend une indentation configurée pour loger le dispositif de dégazage (224).

15. Bloc-batterie selon la revendication 3,
dans lequel le boîtier de bloc (200) est configuré pour loger une pluralité de réseaux de cellules (100), et
dans lequel le cadre de boîtier (220) comprend en outre des cloisons de séparation (223) séparant la pluralité de réseaux de cellules (100) pour qu'ils soient séparés les uns des autres.

16. Bloc-batterie selon la revendication 15,
dans lequel chacun des dispositifs de dégazage (224) est prévu pour correspondre à l'un de la pluralité de réseaux de cellules (100).

17. Véhicule comprenant le bloc-batterie selon l'une quelconque des revendications 1 à 16.
